**Europäisches Patentamt**

**European Patent Office**

**Office européen des brevets**

(19)

(11) Veröffentlichungsnummer: **0 036 860**
**B1**

(12) **EUROPÄISCHE PATENTSCHRIFT**

(45) Veröffentlichungstag der Patentschrift:
09.11.83

(21) Anmeldenummer: 80901459.0

(22) Anmeldetag: **16.07.80**

(86) Internationale Anmeldenummer:
**PCT/EP 80/00056**

(87) Internationale Veröffentlichungsnummer:
**WO 81/00819 (02.04.81 Gazette 81/8)**

(51) Int. Cl.³: **B 23 D 79/00,** B 22 D 31/00

(54) **ENTGRATKAMMER FÜR THERMISCHES ENTGRATEN.**

(30) Priorität: **27.09.79 DE 7927450 U**

(43) Veröffentlichungstag der Anmeldung:
**07.10.81 Patentblatt 81/40**

(45) Bekanntmachung des Hinweises auf die Patenterteilung:
**09.11.83 Patentblatt 83/45**

(84) Benannte Vertragsstaaten:
**CH DE FR GB LI**

(56) Entgegenhaltungen:
**FR - A - 2 282 612**
**US - A - 3 901 488**
**US - A - 4 025 062**

(73) Patentinhaber: **ROBERT BOSCH GMBH, Postfach 50, D-7000 Stuttgart 1 (DE)**

(72) Erfinder: **LEISNER, Ernst, Wettertalstrasse 4, D-7257 Ditzingen (DE)**

EP 0 036 860 B1

## Entgratkammer für thermisches Entgraten

### Stand der Technik

Beim thermischen Entgraten (auch thermochemisches Entgraten genannt) werden die zu entgratenden Werkstücke in eine Entgratkammer eingebracht. In die Entgratkammer wird Brenngas und Sauerstoff über Dosierventile eingeleitet. Das Gasgemisch wird in der Kammer durch eine elektrische Zündeinrichtung gezündet. Bei Wasserstoff als Brenngas verbrennt das Gemisch zu Wasser unter Freisetzung von Wärme. Der Vorgang läuft innerhalb weniger Millisekunden ab. Durch die freiwerdende Wärme treten in der Kammer Temperaturen von ca. 3000°C auf. Nach erfolgter Entgratung der Werkstücke wird die Entgratkammer geöffnet und die Werkstücke durch neue zu entgratende Werkstücke ersetzt.

Der thermische Entgratvorgang bewirkt beim zu entgratenden Werkstück einen gezielten Werkstoffabtrag, insbesondere an Kanten. Nachteilig hierbei ist jedoch auch ein ungewollter, örtlich sehr unterschiedlich starker Abtrag an den die Innenwandung bildenden Flächen bzw. Teilen der Entgratkammer.

Aus der US-A-4 025 062 ist eine Vorrichtung zum thermischen Entgraten bekannt, bei der vor allem eine Übertragung von Kräften von der Brennkammer auf den Maschinenrahmen verhindert werden soll. Das Prinzip einer einfachen Austauschbarkeit der Brennkammerwände ist dieser Druckschrift nicht zu entnehmen. Aus der FR-A-2 282 612 ist eine im Prinzip ähnliche Vorrichtung zum thermischen Entgraten bekannt, wie sie in der vorliegenden Anmeldung beschrieben ist, jedoch muß bei dieser Vorrichtung nach dem Stand der Technik noch der ganze Zylinder ausgetauscht werden, damit aber auch die Bodenplatte, da diese fest mit dem Zylinder des Brennraums verbunden ist. Auch wird dort der Brennraum von oben beschickt.

### Vorteile der Erfindung

Die erfindungsgemäße Entgratkammer mit den kennzeichnenden Merkmalen des Hauptanspruchs hat demgegenüber den Vorteil, daß die Werkzeugkosten beim thermischen Entgraten stark gesenkt werden konnten. Durch die getrennte Ausführung der unterschiedlich verschleißanfälligen Teile der Entgratkammer können kleinere Einheiten sehr leicht und rasch ausgewechselt werden. Da die Entgratkammern mit beachtlichen Taktzeiten arbeiten (z. B. 20 Sekunden), sind die Entgratkammer-Wände hohen thermischen Wechselbelastungen ausgesetzt, was zu Rißbildung durch Thermoschock und somit zu einer starken Verminderung der Zeitstandfestigkeit führen kann. Die Entgratkammer-Innenwände sind einer ständigen Wechselbeanspruchung im Taktrhythmus ausgesetzt. Dabei kann der Abtrag von Entgratkammerteilen in der Größenordnung bis zu einem Millimeter pro 50 000 Entgratzyklen sein.

Die erfindungsgemäße Entgratkammer ist demzufolge in dem Bereich aus leicht austauschbaren Einheiten aufgebaut, die einem höheren Verschleiß unterworfen sind. Dies sind insbesondere die Entgratkammer-Innenwände.

Die Entgratkammer besteht aus einem Entgratkammer-Innenring mit einem angepaßten Entgratkammer-Oberteil sowie einem zugehörigen Schließteller. Diese drei aufeinander angepaßten Teile begrenzen den Entgratkammer-Innenraum und stellen die verschleißanfälligsten Teile dar. Die Entgratkammer-Innenteile sind von ihrer Festigkeit derart ausgebildet, daß sie den Belastungen beim thermischen Entgraten selbständig standhalten können. Hierfür ist zwischen dem Entgratkammer-Innenring und dem äußeren Kühlring eine Spielpassung vorgesehen, um die ständige Temperatur-Wechselbeanspruchung und somit die verminderte Zeitstandfestigkeit auf das Verschleißteil zu begrenzen. Dieses Prinzip wird auch beim Entgratkammer-Oberteil angewandt, welches im kalten Zustand vorzugsweise eine leicht nach innen gewölbte Formgebung aufweist und bei Temperaturbeanspruchung mit dem darüber befindlichen Adapter formschlüssig ist.

### Zeichnung

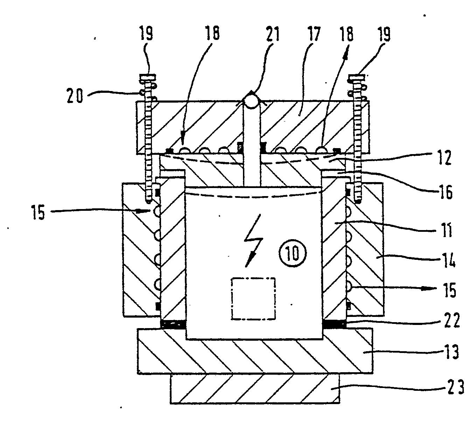

Ein Ausführungsbeispiel der Erfindung ist in der Zeichnung dargestellt und mit Angabe von weiteren Vorteilen in der nachfolgenden Beschreibung näher erläutert. Die Figur zeigt eine schematische Darstellung einer Entgratkammer ohne zugehöriges Maschinengestell.

### Beschreibung des Ausführungsbeispiels

Die Entgratkammer 10 wird durch einen Entgratkammer-Innenring 11, ein Entgratkammer-Oberteil 12 sowie einen Schließteller 13 als Entgratkammerwände begrenzt. Der Kammer-Innenring 11 ist von einem Kühlring 14 mit Kühlschlangen 15 umgeben. Das Verhältnis von Innenring — Wandstärke zur Wandstärke des Kühlrings 14 beträgt z. B. 2 : 3. Durch die geringe Wandstärke der Entgratkammer-Innenteile wird ein großes Temperaturgefälle in den Wandungen vermieden. Dies hat eine beträchtliche Reduzierung der Wärmespannung zur Folge. Die Zeitstandfestigkeit der Teile kann somit wesentlich erhöht werden. Der Kühlring 14 ist ebenso wie der Innenring 11 aus einem Chrom-Nickelstahl hergestellt und als Berstsicherung ausgebildet. Die Spielpassung zwischen dem Innenring 11 und dem Kühlring 14 gewährleistet, daß sich keine betriebsmäßig auftretenden Belastungen vom Innenring auf den Kühlring übertragen können. Der Kühlring ist somit keiner Wechselbeanspruchung unterworfen, deshalb nicht verschleißanfällig und kann somit sicherheitstechnisch als Berstschutz herangezogen werden.

Die Entgratkammer 10 ist nach obenhin durch ein Entgratkammer-Oberteil 12 begrenzt. Zwischen Oberteil 12 und Innenring 11 ist eine Dichtung 16 derart angeordnet, daß sie nicht der direkten Temperaturbelastung ausgesetzt ist. Dem Entgratkammer-Oberteil 12 ist ein Adapter 17 angepaßt. Der obere Adapter 17 ist ähnlich wie der Kühlring 14 ausgebildet. Hierzu ist er mit Kühlschlangen 18 versehen, die die Kühlung des Entgratkammer-Oberteils 12 übernehmen. Um den oberen Adapter 17 keiner Temperatur-Wechselbeanspruchung auszusetzen (kein Verschleißteil), ist das Entgratkammer-Oberteil 12 derart ausgebildet, daß es im kalten Zustand eine nach innen gewölbte Formgebung aufweist. Erst durch die Aufheizung beim thermischen Entgraten dehnt sich das Entgratkammer-Oberteil 12 aus und liegt formschlüssig am oberen Adapter 17 an.

Der Entgratkammer-Innenring 11 und das Entgratkammer-Oberteil 12 werden mittels einer Zuganker-Verbindung 19 zwischen oberen Adapter 17 und Kühlring 14 zusammengehalten. Die Verbindung wird dabei durch Federn 20 zum Ausgleich von Toleranzen, Dehnungen und Setzvorgang der Dichtung 16 vorgespannt. Durch den Gasanschluß 21 wird die Entgratkammer mit Brenngas und Sauerstoff versorgt.

Die Entgratkammer 10 wird in ihrem unteren Bereich von dem Schließteller 13 begrenzt, der mittels einer Dichtung 22 am Entgratkammer-Innenring 11 anschließt. Ein weiterer unterer Adapter 23 übernimmt wie der obere Adapter 17 den Übergang zum nicht in der Figur dargestellten Maschinengestell.

## Patentansprüche

1. Entgratkammer für thermisches Entgraten, bestehend aus einem Ring (11), einem hieran angepaßten Schließteller (13) und einem an den Ring (11) angepaßten Entgratkammer-Oberteil (12), wobei sich der Schließteller (13) und der Entgratkammer-Oberteil (12) jeweils über einen Adapter (17, 23) während des Entgratvorganges am Maschinengestell abstützen, dadurch gekennzeichnet, daß der Ring (11) in einem mit einer Kühlschlange (15) versehenen Außenring (14) mit Spiel angeordnet ist und daß der mit dem Entgratkammer-Oberteil (12) verbundene obere Adapter (17) mit einer Kühlschlange (18) versehen ist, wobei die Verbindung von oberem Adapter (17), Entgratkammer-Oberteil (12) und Ring (11) über mit dem Außenring (14) verbundene Zuganker (19) erfolgt, während der Ring (11) sich am Außenring (14) abstützt.

2. Entgratkammer nach Anspruch 1, dadurch gekennzeichnet, daß das Entgratkammer-Oberteil (12) im kalten Zustand eine nach innen gewölbte Formgebung aufweist.

## Claims

1. A deburring chamber for thermal deburring consisting of a ring (11), a closure plate (13) fitted on the ring and a deburring chamber upper part (12) fitted to the ring (11), wherein the closure plate (13) and the deburring upper part (12) are each supported on the machine frame through a respective adaptor (17, 23) during the deburring operation, characterised in that, the ring (11) is arranged with clearance in an outer ring (14) provided with a cooling coil (15) and that the upper adapter (17) connected to the deburring chamber upper part (12) is provided with a cooling coil (18), wherein the interconnection of the upper adapter (17), the deburring upper part (12) and the ring (11) takes place through tie-rods (19) connected to the outer ring (14), whilst the ring (11) is supported on the outer ring (14).

2. A deburring chamber according to claim 1, characterised in that, in the cold state, the deburring upper part (12) has an inwardly cambered shape.

## Revendications

1. Chambre d'ébarbage pour ébarbage thermique constituée d'un anneau (11), d'un plateau de fermeture (13) adapté à cet anneau, et d'une partie supérieure (12) de chambre d'ébarbage adaptée à l'anneau (11), le plateau de fermeture (13) et la partie supérieure de chambre d'ébarbage (12) prenant respectivement appui sur le bâti de machine pendant le processus d'ébarbage, par l'intermédiaire d'un adaptateur respectif (17, 23), chambre d'ébarbage caractérisée en ce que l'anneau (11) est disposé dans un anneau externe (14) muni d'un serpentin de refroidissement (15), et que l'adaptateur supérieur (17) relié à la partie supérieure (12) de la chambre d'ébarbage est également muni d'un serpentin de refroidissement (18), tandis que la liaison de l'adaptateur supérieur (17), de la partie supérieure (12) de la chambre d'ébarbage, et de l'anneau (11) s'effectue par l'intermédiaire de tirants d'ancrage (19) preliés à l'anneau externe (14), pendant que l'anneau (11) prend appui sur l'anneau externe (14).

2. Chambre d'ébarbage selon la revendication 1, caractérisée en ce que la partie supérieure (12) de la chambre d'ébarbage, lorsqu'elle est froide, présente une conformation bombée vers l'intérieur.